# EUROPEAN PATENT SPECIFICATION

(11) **EP 2 070 628 B1**
(45) Date of publication and mention of the grant of the patent: **29.03.2017**
(21) Application number: 07123127.8
(22) Date of filing: 13.12.2007
(51) Int. Cl.: B23K 9/20

(54) **Stud welding apparatus**
Bolzenschweißvorrichtung
Appareil de soudure pour clou

(43) Date of publication of application: 17.06.2009
(73) Proprietor: CATERPILLAR INC., Peoria IL 61629-6490 (US)
(72) Inventor: Danilo, Beltramini, 6010 Couillet (BE)
(74) Representative: BRP Renaud & Partner mbB Rechtsanwälte Patentanwälte Steuerberater

(56) References cited:
- WO-A-97/26118
- JP-A- H0 929 439
- JP-A- 63 230 277
- US-A1- 2004 245 221
- US-A1- 2005 056 620
- US-A1- 2007 251 923

## Description

### Technical Field

The present disclosure relates to a stud welding apparatus and, more particularly, to a stud welding apparatus with a robot.

### Background

Stud welding, especially arch stud welding is a method for welding studs such as pins to a surface, in which a stud is positioned with an end against a work surface, after which first a pilot current is sent through the stud and work surface. Then the stud is pulled back from the surface slightly, whereas a welding current is sent through the stud and surface, forming an electrical arch between the end of the stud and the surface. The arch will melt at least one of part of the end of the stud and at least part of the work surface. After the material has sufficiently melted, the end of the stud is pushed back again against the work surface, such that the end of the stud is joined to the work surface. After cooling of the material the stud is welded to the work surface.

In European Patent Application EP 1671737 A (the EP'737 application) a welding apparatus for arch stud welding is disclosed, comprising a robot holding a welding head. A stud can be gripped by the welding head and can be moved against and retracted from the work surface by the robot. Using a robot for stud welding can have the advantage that the stud welding process can be further automated and made more suitable for some types of industrial application. However, in the apparatus according to the EP'737 application the entire arm of the robot has to be moved in order to displace the stud relative to the work surface. This can, especially during forming of the arch, be cumbersome and lead to sub optimal accuracy of the displacements and of the welding.

The disclosed welding apparatus is directed at addressing at least one of the problems set out above or providing an alternative welding apparatus.

US 2005/0056620 A1 discloses a stud welding apparatus having a welding tool slidably movable by pneumatic means relative to a base attached to a robot arm. The actual welding tool comprises a gripper which can be provided with an electrically powered actuator in the form of a linear motor or a magnet element. JP H 09-29439 discloses a stud welding tool having a shield which can be opened and closed around a stud by movement parallel to a work surface to which a stud is to be welded, in a plane perpendicular to a direction of movement of the stud relative to said surface. The shield comprises two hollow blocks which are integral parts of the tool and can be cooled, whereas a shielding gas can be inserted into a spaced enclosed by the shield once closed around the stud. By moving the tool towards the work surface or away therefrom the stud can be pressed against the work surface or removed therefrom.

### Summary of the Invention

In one aspect the present disclosure is directed to a stud welding apparatus comprising a robot and a welding tool. The welding tool is connected to and movable by the robot. The welding tool is provided with a stud gripper and a stud gripper actuator for moving the stud gripper. The stud gripper actuator is an electrically powered actuator.

In another aspect the present disclosure is directed to a stud welding tool, comprising a stud holder and a stud holder actuator. The stud welding tool further comprises at least one electrical conductor and at least one connector for a robot. The stud holder actuator is an electrically powered actuator.

In a further aspect the present disclosure is directed to a method for stud welding, comprising gripping a stud with a stud gripper and positioning the stud against a work surface with a robot. An electrical current is sent through the stud and the work surface, and then the stud is withdrawn from the work surface in a first direction, thereby forming an electrical arch between the stud and the work surface. At least one of the work surface and an area of the stud facing said work surface are heated by the arc. Then the stud is forced back against the work surface in a second direction, substantially opposing the first direction. At least one of the movement in the first direction and in the second direction is obtained by at least electrically actuating the stud gripper actuator.

### Brief Description of the Drawings

Fig. 1 schematically in side view, partly broken away, a stud welding apparatus;
Fig. 2 schematically in frontal view, partly broken away, a stud welding apparatus of Fig. 1;
Fig. 3 schematically a cross sectional view of a welding apparatus of Fig. 1 and 2, along the line III - III in Fig. 1;
Fig. 4 an exploded view of a stud welding tool;
Fig. 5 an exploded view of a stud gripper;
Fig. 6 an exploded view of a shield gripper; and
Fig. 7 schematically six steps in a stud welding process.

### Detailed Description

In the description the same or similar features or elements have the same or corresponding reference signs. The embodiments shown are only shown and discussed by way of examples and should not be construed as limiting the disclosure. The disclosure will be elucidated with reference to a stud welding apparatus, tool and method, wherein shields can be used during welding. It should be emphasized that the same or similar tools, apparatus and methods can be used without the shield. Such embodiments are also considered to have been disclosed in this disclosure. In this disclosure stud has to be understood as including but not limited to any piece of material or product, being made of a material suitable for resistance welding, which can be welded to a surface with an end, such that after welding it projects from said surface. Embodiments of studs can include products having a length direction and an end to be welded, and can have for example substantially a shape of a rod, pin, bushing, (semi)cylinder, boss, rivet or block.

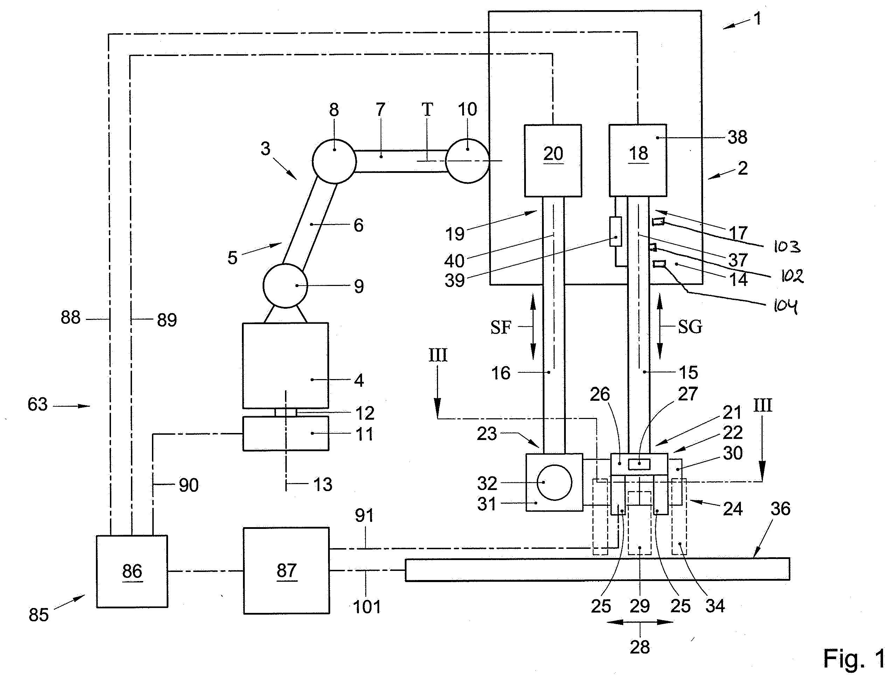

In Fig. 1 - 3 schematically a stud welding apparatus 1 is shown, having a welding tool 2 connected to and at least partly carried by a robot 3. The robot 3 can be an industrial robot and can have for example a body 4 and an arm 5 extending from the body 4. The arm 5 can for example have a lower arm 6 and an upper arm 7, connected to each other in an elbow 8. The lower arm 6 can be connected to the body 4 by a shoulder 9, whereas the welding tool 2 can be connected to the upper arm 7 by a wrist 10. The body 4 can be connected to a base 11 by a shaft 12 allowing rotation of the body 4 relative to the base 11 around a longitudinal axis 13 of the shaft 12. In an embodiment the elbow 8, shoulder 9 and wrist 10 can all allow for example relative rotation of the elements connected thereby around axis perpendicular to the plane of drawing of Fig. 1, through the respective joints 8, 9, 10. Moreover, the wrist 10 can in an embodiment allow rotation of the tool 2 around an axis T which can extend parallel to a length direction of the upper arm 7 or perpendicular to the side of the tool 2 facing the robot 3. A robot 3 can have a number of degrees of freedom for moving the tool 2 relative to the base 11. In an embodiment the robot 3 can have five or more degrees of freedom, in order to allow the tool 2 to be directed almost freely, with a low number of singularities. In another embodiment the robot 3 can be designed differently, for example for allowing less freedom of movement of the tool 2. The robot 3 can for example be designed to allow only linear movement of the tool 2 relative to the base 11.

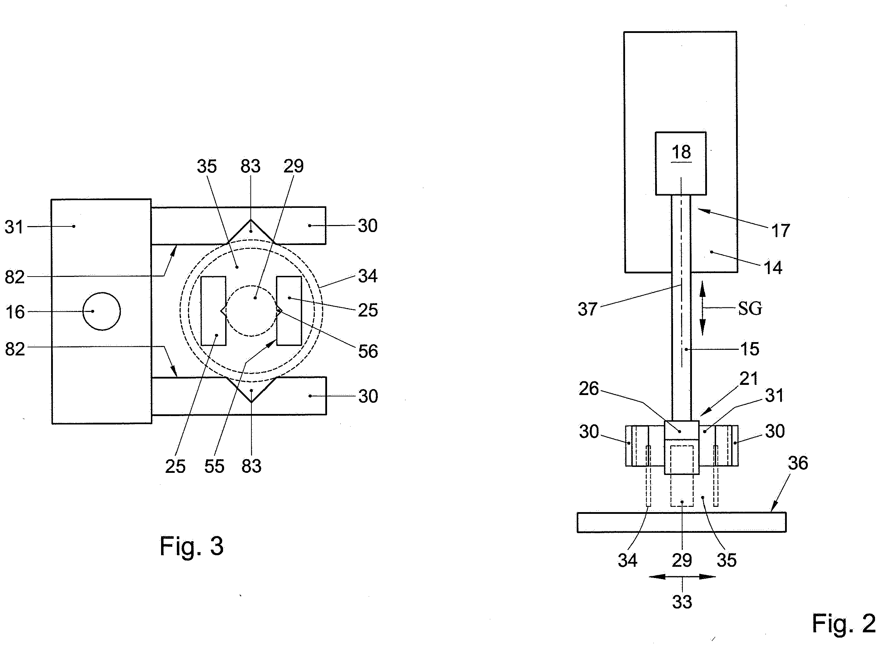

The welding tool 2 comprises a body 14 connected to the shoulder 10. A first shaft 15 and a second shaft 16 extend from the housing 14, substantially parallel to each other and in the position as shown in Fig. 1 and 2 downward. A first end 17 of the first shaft 15 is connected to a first actuator 18. A first end 19 of the second shaft 16 is connected to a second actuator 20. The first and second actuators 18, 20 are housed in the body 14. A second end 21 of the first shaft 15 is connected to a stud gripper 22. The second end 23 of the second shaft 16 is connected to a shield gripper 24. The first and second actuators 18, 20 shall further also be referred to as stud gripper actuator 18 and shield gripper actuator 20 respectively.

The stud gripper 22 comprises two stud gripper claws 25, extending in Fig. 1 and 2 downward from a stud gripper bridge 26 connected to the first shaft 15. In the stud gripper bridge 26 a stud gripper claw actuator 27 is provided for moving the claws 25 along the bridge 26 towards each other or apart, in the direction 28 (Fig. 1). Thus a stud 29, in Fig. 1 - 3 shown in phantom lines, can be gripped between the claws 25 and can be released by the claws 25, by actuating the stud gripper claw actuator 27. The shield gripper 24 comprises two shield gripper claws 30, extending in Fig. 1 and 2 horizontally from a shield gripper bridge 31 connected to the second shaft 16. In the shield gripper bridge 31 a shield gripper claw actuator 32 is provided for moving the claws 30 along the bridge 31 towards each other or apart, in the direction 33 (Fig. 2). Thus a shield 34, in Fig. 1- 3 shown in phantom lines, can be gripped between the claws 30 and can be released by the claws 30, by actuating the shield gripper claw actuator 32. A shield 34 has to be understood as an element that can extend around at least part of the stud 29 during welding, for shielding the stud 29 from the environment and/or vice versa. A shield can for example be but is not limited to a ferule, a substantially cylinder shaped element having a central opening 35 into which the stud 29 and if necessary also part of the stud gripper 22 can extend. A shield can for example be made of ceramics, clay, plastic, metal or any other suitable material. In an embodiment the shield can be a disposable element. In another embodiment the shield can be a reusable element.

The stud gripper actuator 18 is designed to move the stud gripper 22 relative to the body 14 and/or to a work surface 36. In an embodiment the actuator 18 can be designed to move the stud gripper 22 in a linear direction SG, substantially parallel to a longitudinal axis 37 of the shaft 15. The actuator 18 can in an embodiment be an electrically powered actuator. In an embodiment the actuator comprises a solenoid 38 for accurately positioning the stud gripper 22 and/or stud 29 relative to the work surface 36. Using an electrically activated or powered actuator 18 provides the advantage that the stud gripper can be brought and held in any position with the range of movement allowed by the actuator 18. In an embodiment a sensor 39 can be provided between the actuator 18 and for example the shaft 15 or the gripper 22, in order to measure and control the movement and relative displacement of the gripper 22. In an embodiment the tool 2 can be provided with limiting switches 103, 104, for detecting movement and/or positioning of the gripper 22 relative to the body 14 or a work surface 36. In an embodiment an protrusion 102 can be provided on the shaft 15, movable between the switches 103, 104. In an embodiment the switches 103, 104 can be in a fixed position. In another embodiment the switches can be displaceable relative to the body 14 and/or to the protrusion 102, such that the limits to the movement or detection of positions can be adjusted. In another embodiment the switches 103, 104 can be pressure switches. These can in an embodiment be incorporated in a hydraulic or pneumatic system for example for activating a pneumatic actuator 20 for the shield gripper 24. Limit switch has to be understood as encompassing but not limited to a switch that can limit a path of movement of a gripper 22, 24 in a direction, or detect a position or movement of a gripper 22, 24 relative to the body 14 or surface 36, or a combination thereof.

The shield gripper actuator 20 is designed to move the shield gripper 24 relative to the body 14 and/or to a work surface 36. In an embodiment the actuator 20 can be designed to move the stud gripper 24 in a linear direction SF, substantially parallel to a longitudinal axis 40 of the shaft 16. The actuator 20 can in an embodiment be a pneumatically powered actuator 20. In another embodiment the actuator 20 can be an electrically powered actuator, for example including a solenoid.

In an embodiment the stud gripper claw actuator 27 and/or the shield gripper claw actuator 32 can be pneumatically operated and can for example comprise a piston-cylinder set for moving the claws 25 and 30 in the directions 28 and 33 respectively. In an alternative embodiment the stud gripper claw actuator 27 and/or the shield gripper claw actuator 32 can be actuated and powered electrically. In a still further embodiment the stud gripper claw actuator 27 and/or the shield gripper claw actuator 32 can be actuated by the movement of the relevant gripper 22, 24 in the direction SG, SF respectively, such that in a downward movement the claws 25, 30 are moved to respective closed positions, gripping a stud 29 or shield 34 respectively, whereas upon upward movement the stud 29 and shield 34 are released.

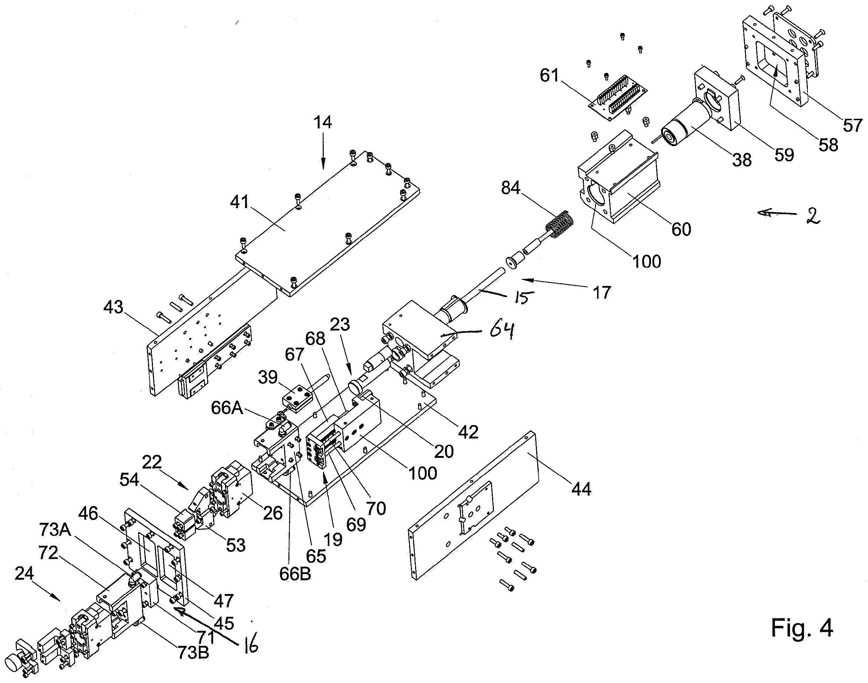

Fig. 4 shows an embodiment of a welding tool 2, in exploded view. A plurality of bolts is shown for assembling the various parts. Unless specified hereafter these will not be individually numbered or discussed. The tool 2 comprises a body 14, comprising a front plate 41, a back plate 42 and two side plates 43, 44. These can be bolted together. A bottom plate 45 is provided, having two holes 46, 47 side by side. Through the first hole 46 a stud gripper 22 can extend, through the second hole 47 a shield gripper 24.

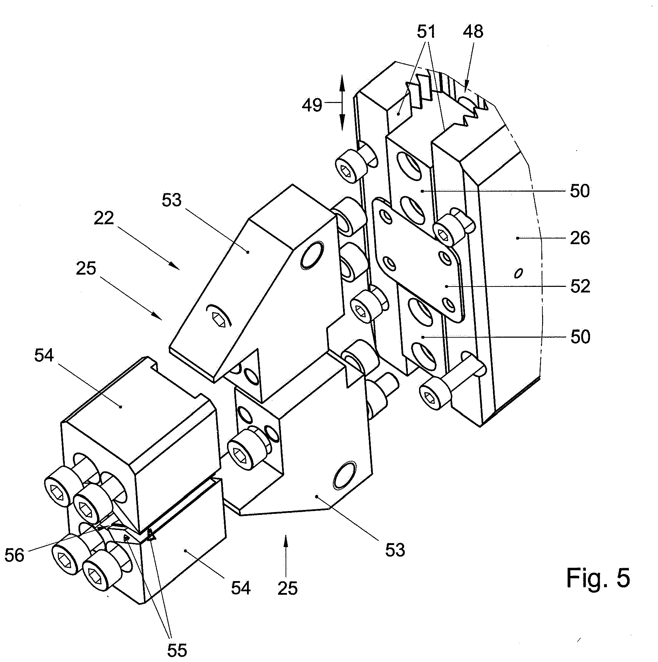

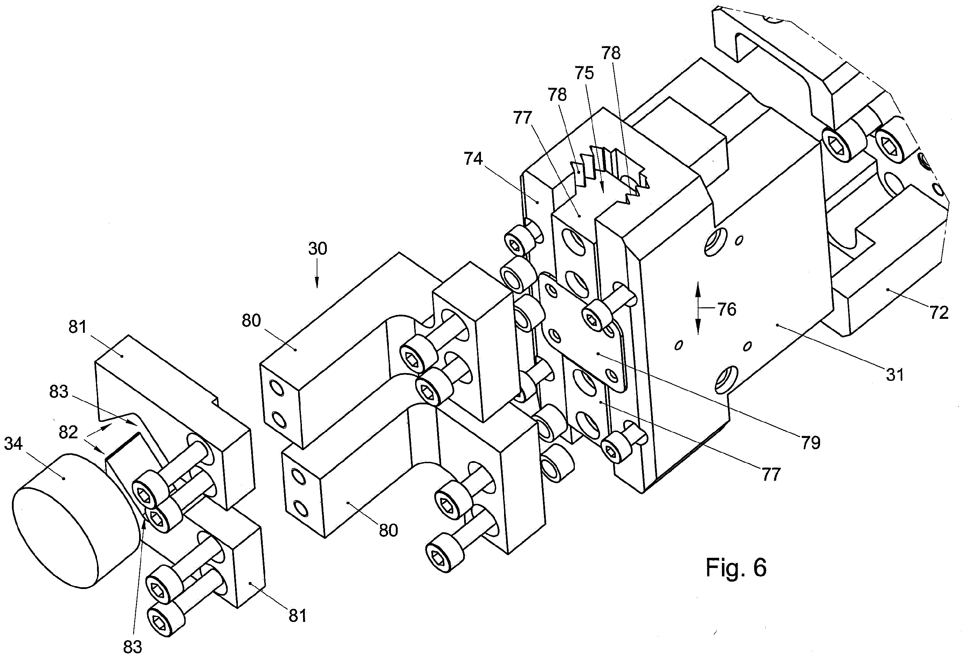

In Fig. 5 part of a stud gripper 22 is shown in enlarged scale, in Fig. 6 part of a shield gripper 24. The stud gripper 22 comprises the bridge 26 having a stud gripper claw actuator 27 (not shown) comprising a groove 48 extending in a longitudinal direction 49 thereof. Two carrying blocks 50 are provided inside the groove 48, slidable in the longitudinal direction 49. The blocks 50 and walls 51 of the groove 48 have cooperating profiles, such that any other movement of the blocks 50 than said sliding is prevented. A closing plate 52 is provided covering the groove 48 between the blocks 50. A claw plate 53 is provided on each of the blocks 50, whereas a gripper block 54 can be positioned on each of the claw plates 53. Each set of a claw block 50, claw plate 53 and gripper block 54 forms a claw 25. The gripper blocks 54 can in an embodiment be provided with facing surfaces 55, provided each with a groove 56 extending in a direction substantially perpendicular to the longitudinal direction 49. These grooves 56 provide for enhanced gripping of a stud 29, especially if the stud 29 for example has a circular cross section.

Opposite the bottom plate 45 a top plate 57 is provided, closing off the body 14 of the tool 2. An opening 58 can be provided in the top plate 57, in which a holding block 59 can be inserted, for holding a solenoid 38 or other electrical actuator 18. A solenoid block 60 can be positioned between the plates 41 - 44, adjacent the top plate 57, provided with a through bore 62 in which the solenoid 18 can extend. An electrical connecting board 61 can be connected to the solenoid block 60, for connecting the welding tool 2 electrically to a controller 86, by a connecting cable 63 (Fig. 1). The connecting board 61 can comprise an electrical circuit to group signals from sensors and send them to the robot 3. A guide block 64 is provided between the solenoid block 60 and the bottom plate 45, for guiding the first shaft 15, which is connected with a first end 17 to the solenoid 38 and with the opposite second end 23 to a holder 65 for holding the bridge 27. Connectors 66A and B for pneumatic lines (not shown) are provided on two opposite sides of the holder 65, for energizing the stud gripper claw actuator 27 in a closing direction of the claws 25 and an opening direction of the claws 25 respectively. A sensor 39 can be connected between the guide block 64 and the holder 65, with which sensor 39 the relative distance and/or changes in distance between the guide block 64 and the holder 65 can be determined and controlled, which distance can be used for positioning of the grippers 22 or at least the stud 29 relative to the working surface 36.

An actuator block 100 is connected to the back plate 42. The actuator block 100 can hold the shield gripper actuator 20, which will further be referred to as solenoid 20. A slide 67 is slidably connected to the actuator block 100 and connected to the solenoid 20, such that the solenoid can move the slide 67 along part of a side 68 of the actuator block 66. In an embodiment guiding rods 69 can be provided, connected to the slide 67 and extending in complementary bores 70 in the actuator block 100, for guiding a linear movement of the slide 67 relative to the actuator block 100. The slide 67 can form a first end 19 of a shaft 16 as disclosed in Fig. 1 and 2.

The shield gripper 24 as partly shown in Fig. 6 can comprise a mounting block 71 that can at one side be connected to the slide 67 and at an opposite side to a holder 72 for the shield gripper bridge 31. The holder 72 can be provided, at two opposite sides thereof, with connectors 73A, B, for pneumatic lines (not shown) for energizing the shield gripper claw actuator 32 in a closing direction of the claws 30 and an opening direction of the claws 30 respectively. The shield gripper bridge 31 can be provided in the holder 72 and can be provided at a side 74 facing away from the holder 72 with a groove 75. The shield gripper claw actuator 32 can be provided in the bridge 32. The groove 75 can extend in a longitudinal direction 76 of the bridge 32. Two carrying blocks 77 are provided inside the groove 75, slidable in the longitudinal direction 76. The blocks 77 and walls 78 of the groove 75 have cooperating profiles, such that any other movement of the blocks 77 than said sliding in the longitudinal direction 76 is prevented. A closing plate 79 is provided covering the groove 75 between the blocks 77. A claw plate 80 is provided on each of the blocks 77, whereas a shield gripper block 81 can be positioned on each of the claw plates 80. In an embodiment the claw plates 80 can be angled, such that the shield gripper blocks 81, which can have a longitudinal direction parallel to each other and substantially perpendicular to the longitudinal axis of the groove 75, can extend, in a bottom view, to a side of the bridge 31 of the shield gripper 24, at the side of the stud gripper 22. Each set of a carrying block 77, claw plate 80 and shield gripper block 81 forms a shield gripper claw 30. The shield gripper blocks 81 can in an embodiment be provided with facing surfaces 82, provided each with a groove 83 extending in a direction substantially perpendicular to the longitudinal direction 76. These grooves 83 provide for enhanced gripping of a shield 34, especially if the shield 34 for example has a circular cross section, such as in a ring shaped shield 34.

As can be seen in for example an embodiment of Fig. 1 - 3, the shield gripper claws 30 can extend at opposite sides of the stud gripper 22, such that a shield 34 having a central opening 35 can be gripped by the shield gripper 24, whereas the stud gripper 22 can be moved at least partly into said opening 35, holding a stud 29. In the solenoid block 60 a spring 84 can be positioned around the shaft 15, for presetting a force exerted on the stud gripper 22 in the direction of the surface 36.

In an alternative embodiment the shield gripper actuator 20 can be pneumatically operated. In a further embodiment the shield gripper 24 and associated elements can be omitted.

An electrical circuit 85 is provided, comprising a controller 86 and a power source 87. The controller is connected to the first 18 and second actuator 20 respectively by a first connector 88 and a second connector 89. Also the robot 3 can be connected to the controller 86, by a third connector 90. The power source 87 can comprise for example a welding transformer, suitable for providing currents at different levels. The power source 87 is connected to the stud gripper 22 by a fourth connector 91 and to the work surface 36 by a fifth connector 101. In an alternative embodiment the work surface could be connected to an earth link.

### Industrial Applicability

The disclosed welding apparatus 1 and welding tool 2 can be used for stud welding. By using a stud gripper 22 which can be electrically driven for movement thereof relative to for example a work surface 36, the distance of an end 93 of the stud 29 to the work surface 36 can be accurately controlled. Moreover, the accelerations and/or speed of the stud 29 relative to the work surface 36 can be accurately controlled, which is of importance to obtain proper welding.

With a welding apparatus 1 a stud 29 can be picked up from for example a stud magazine (not shown) or other position in which studs are provided for welding. The movement of the stud gripper 22 to a position above a stud 29 to be picked up can be obtained by the robot 3, by the stud gripper actuator 18 or by a combination of the two. The stud 29 can be picked up by moving the stud gripper claws 25 apart and positioning them at two opposite sides of a stud 29, near a first end 92 opposite a second end 93 to be welded to a work surface 36. Then the stud gripper claws 25 are moved in opposite direction, towards each other, thereby gripping the stud 29 at the first end 92. The stud 29 can be placed, with the second end 93, inside an opening 35 of a shield 34, such as a ferule, by movement of the robot 3 and/or of the stud gripper actuator 18. The shield gripper claws 30 can be moved apart, such that the shield gripper claws 30 or at least the shield gripper blocks 81 can be positioned at opposite sides of the shield 34. Then the shield gripper claws 30 can be moved towards each other again, thereby gripping the shield 34. In an alternative embodiment the stud 29 can be positioned inside the shield 34 prior to picking them up with the apparatus 1.

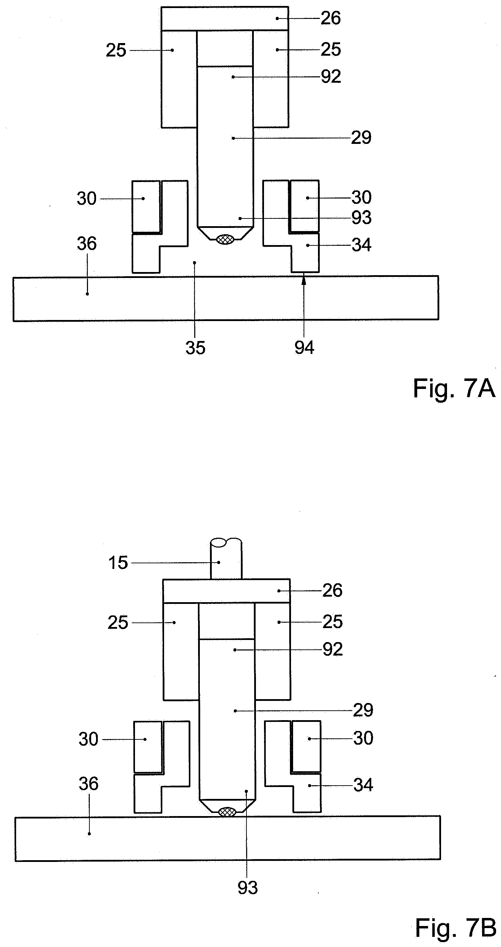

The stud gripper 22 with the stud 29 is moved relative to the shield 34, such that the second end 93 extends within the opening 35, spaced apart from the lower side 94 of the shield, as schematically shown in Fig. 7A, partially in cross section. This can be achieved by retracting the stud gripper 22 relative to the shield gripper 24, by activating the stud gripper actuator 18. In this position the stud 29 and shield 34 are moved, by the robot 3, to a position above the work surface 36. Then lower side 94 of the shield 34 is moved against the work surface 36, whereas the second end 93 of the stud 29 is kept at a distance from the work surface 36. This position is shown in Fig. 7A. To this end the shield gripper actuator can be actuated, to move the shield gripper 24 and shield 34, relative to the stud 29, in the direction of the work surface 36. In an alternative embodiment the shield can be pressed against the work surface 36 by using the robot 3, whereas the stud 29 is kept in the same position, relative to the shield 34. In a further embodiment both the stud gripper actuator 18 and the shield gripper actuator 20 can be activated for obtaining the relative positions of the stud 29, shield 34 and work surface 36.

When an embodiment is used having limit switches 103, 104, the first switch 103 can be used to detect contact of the object 13, with the surface 45, where as the second switch 104 can be used to detect overpressure exerted by the tool 4 to the surface 45. When such overpressure is detected the switch can switch off the tool 4.

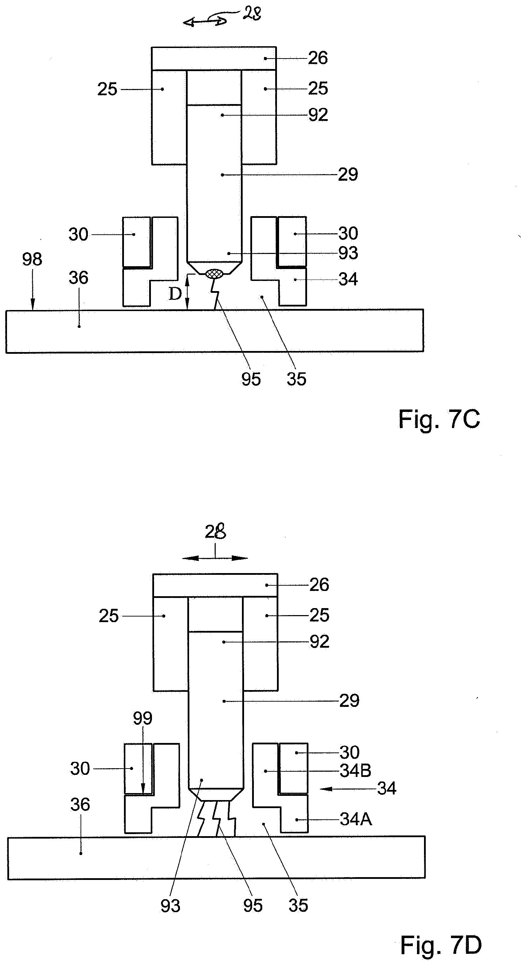

From the position in Fig. 7A the stud 29 can be moved towards and against the work surface 36 by activating the stud gripper actuator 18. This means that the second end 93 is moved against the work surface 36, whereas the shield 34 is kept in the same position, as is shown in Fig. 7B. A pilot current is led through the stud 29 and work surface 36, from the power source 87, and the stud 29 is retracted relatively quickly from the work surface 36, in the direction of the body 14, by activating the stud gripper actuator 18 appropriately. Due to the distance D between the second end 93 of the stud 29 and the work surface 36, the pilot current will form an electric arch 95 between the second end 93 and the work surface 36, as is shown in Fig. 7C.

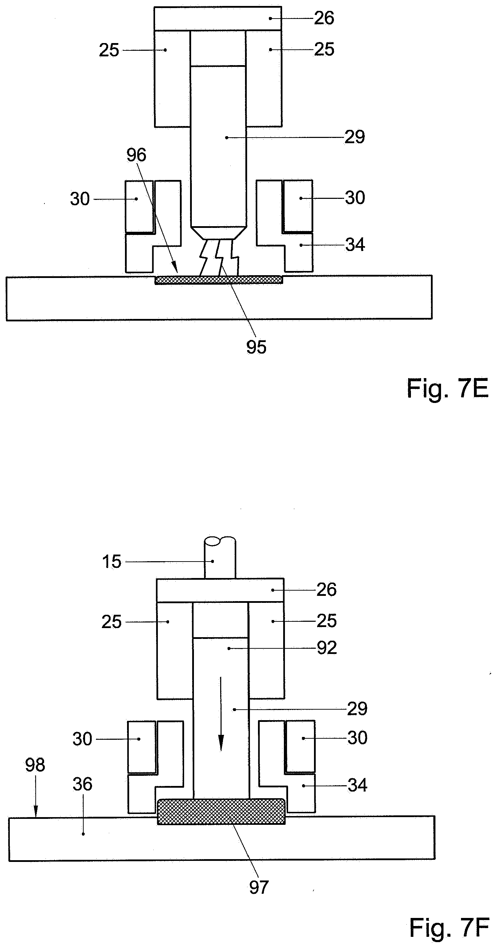

When the second end 93 is retracted to its final distance D form the work surface 36, for example about 2 mm, the current is increased from the pilot current towards a welding current, as is shown in Fig. 7D. The intensity of the arch 95 will be increased. Due to the forming of the arch 95 the second end 93 and an area 96 of the work surface 36 adjacent the second end 93, through which area 96 the arch 95 forming current is led, will be heated to such extend that at least part thereof will at least partly melt, as is shown in Fig. 7E. The shield 34 surrounds the area 96 at least substantially, and the second end 93 of the stud 29, defining a welding area 97 and shielding the welding area 97 from the environment. At the same time the shield 34 shields the surroundings of the welding area 97 from for example contamination.

When the second end 93 and the area 96 are sufficiently heated and have reached a fusion temperature, depending on for example the materials used, the size of the surface area 96 and the second end 93 and other well known factors, the stud 29 is, with its second end 93, plunged gently into the partly melted surface area 96, as can be seen in Fig. 7F. Gently has to be understood in this context as at least encompassing moving the stud 29 into the direction of the area 96 with a speed which is, at least upon impact between the stud 29 and the work surface 36, lower than the speed with which the stud 29 was retracted from the work surface 36, for forming the electrical arch 95. In another embodiment gently can be understood as moving the second end 93 of the stud 29 into the area 96 such that no material of the area 96 or the stud 29 is forced beyond the shield 34 and/or limited to no spattering will occur. In an embodiment the speed can be such that no spattering will occur. As can be seen in Fig. 7F in an embodiment the second end 93 can be pushed into the area 96 slightly further than the surface 98 of the working surface 36. Some of the melted material will then be forced up and can abut against the inner side of the shield, defining the welding area. The current is maintained for a short period after inserting the second end 93 into the area 96, for obtaining a correct welding. Since the movement of the stud gripper 22 is electrically operated by the actuator 18, the speed, acceleration and deceleration and/or range of movement can be minutely controlled. Moreover, the movement of the stud 29 can in an embodiment be accurately synchronized with initiating and changing the current, both the pilot current and the welding current. When an embodiment of a welding apparatus 1 or welding tool 2 is used having a sensor 39 for sensing the displacement of the stud gripper 22, the movement of the stud gripper 2 can be accurately measured and controlled. This can in an embodiment be irrespective of for example the overall length of the stud 29 and the shield 34 and the positions in which they are gripped, because the sensor 39 can be designed for measuring relative movement, next to or in stead of absolute movement.

In an embodiment the shield 34 is pushed against the working surface 36. By operating the shield gripper actuator 20 electrically the pressure with which the shield 36 is pressed against the working surface 36 can then be accurately set. In another embodiment the shield 34 can be brought to a position adjacent to but not in contact with the working surface 36. By using an embodiment of an electrically operated shield gripper actuator 24 this position can be accurately set and maintained. In another embodiment the shield 34 can be pushed against the working surface 36 by a pneumatically operated shield gripper actuator 20.

After the short period the current is stopped and the material is allowed to set again, fusing the stud to the working surface 36. The shield 34 can then be removed, for example be broken away.

In an embodiment the stud gripper 22 and the shield gripper 24 can be provided in the same welding tool 2, connected to actuators 18, 20 in the same body 14. They can therefore be repositioned in space freely and together, without changing their relative positions. The welding tool 2 can be used for welding studs 29 in any position or orientation. In an embodiment as shown in Fig. 7 the shield 34 can have a lower cylindrical portion 34A and an upper cylindrical portion 34B, having a diameter smaller than the lower portion 34A. A shoulder 99 can thus be formed above the lower portion 34A. The shield gripper claws 30 can be designed such that they can grip the shield above the shoulder 99, on the outside of the upper portion 34B.

By using claws 25 and/or 30 a welding tool 2 according to the disclosure can be used for different types and sizes of studs 29 and shields 34.

Although embodiments of a welding apparatus, welding tool and welding method have been described herein, improvements and modifications may be incorporated within the scope of the following claims.

## Claims

1. Stud welding apparatus, comprising:
a robot (3); and
a welding tool (2);
wherein the welding tool (2) is connected to and movable by the robot (3);
the welding tool (2) having:
a stud gripper (22); and
a stud gripper actuator (18) for moving the gripper (22);
wherein the stud gripper actuator (18) is an electrically powered actuator,
**characterized by**
a shield gripper (24), wherein a shield gripper actuator (20) is provided and/or wherein the shield gripper (24) is movable relative to the stud gripper (22).

2. A stud welding apparatus according to claim 1, wherein the stud gripper actuator (18) comprises a solenoid and/or wherein the shield gripper actuator (20) comprises a solenoid.

3. A stud welding apparatus according to claim 1 or 2, wherein the welding tool (2) is connected to the robot (3) by at least one releasable connector.

4. A stud welding apparatus according to any one of the preceding claims, wherein the stud gripper (22) comprises at least two claws (25), movable relative to each other, wherein the claws (25) are preferably pneumatically or hydraulically movable.

5. A stud welding apparatus according to any one of claims 1-4, wherein the welding tool (2) has a body (14) and the stud gripper actuator (18) is designed to move the stud gripper (22) relative to the body (14) and/or a work surface (36).

6. A stud welding apparatus according to any one of claims 1-5, wherein the welding tool (2) has a body (14) and the shield gripper actuator (20) is designed to move the shield gripper (24) relative to the body (14) and/or a work surface (36).

7. A stud welding apparatus according to any one of the preceding claims, wherein the shield gripper (24) comprises at least two claws (30), movable relative to each other.

8. Stud welding tool, comprising:
a stud holder (22);
a stud holder actuator (18);
at least one electrical connector, and
at least one connector for a robot (3);
wherein the stud holder actuator (18) is an electrically powered actuator,
**characterized by**
a shield gripper (24), wherein a shield gripper actuator (20) is provided and/or wherein the shield gripper (24) is movable relative to the stud holder (22).

9. A stud welding tool according to claim 8, wherein the stud holder (22) comprises a solenoid.

10. A stud welding tool according to claim 8 or 9, wherein the stud holder (22) comprises at least two claws (25), movable relative to each other.

11. A stud welding apparatus according to any one of claims 8 - 10, wherein the welding tool (2) has a body (14) and the stud gripper actuator (18) is designed to move the stud gripper (22) relative to the body (14) and/or a work surface (36).

12. A stud welding apparatus according to any one of claims 8 - 11, wherein the welding tool (2) has a body (14) and the shield gripper actuator (20) is designed to move the shield gripper (24) relative to the body (14) and/or a work surface (36).

13. Method for stud welding, comprising:
gripping a stud (29) with a stud gripper (22);
positioning the stud (29) adjacent a work surface (36) with a robot (3);
sending an electrical current through the stud (29) and the work surface (36);
withdrawing the stud (29) from the work surface (36) in a first direction, thereby forming an electrical arc between the stud (29) and the work surface (36);
heating at least one of the work surface (36) and an area of the stud (29) facing said work surface (36) by the arc; and
forcing the stud (29) back against the work surface (36) in a second direction, substantially opposing the first direction;
**characterized in that** at least one of the movement in the first direction and in the second direction is obtained by at least electrically actuating a stud gripper actuator (18), and
positioning a shield (34) against the work surface (36) around the stud (29).

14. A method according to claim 13, further comprising positioning the stud (29) against the work surface (36) with said end by the gripper actuator (18).

15. A method according to claim 13 or 14, wherein the shield (34) is positioned against the work surface (36) by moving a shield gripper (24) relative to the stud (15).

## Patentansprüche

1. Bolzenschweißvorrichtung, umfassend:
einen Roboter (3); und
ein Schweißwerkzeug (2);
wobei das Schweißwerkzeug (2) verbunden ist mit und bewegbar ist von dem Roboter (3);
das Schweißwerkzeug (2), aufweisend:
einen Bolzengreifer (22); und
ein Bolzengreiferstellglied (18) zum Bewegen des Greifers (22);
wobei das Bolzengreiferstellglied (18) ein elektrisch angetriebenes Stellglied ist,
**gekennzeichnet durch**
einen Schildgreifer (24), wobei ein Schildgreiferstellglied (20) vorgesehen ist und/oder wobei der Schildgreifer (24) relativ zu dem Bolzengreifer (22) bewegbar ist.

2. Bolzenschweißvorrichtung nach Anspruch 1, wobei das Bolzengreiferstellglied (18) ein Solenoid umfasst und/oder wobei das Schildgreiferstellglied (20) ein Solenoid umfasst.

3. Bolzenschweißvorrichtung nach Anspruch 1 oder 2, wobei das Schweißwerkzeug (2) mit dem Roboter (3) durch zumindest ein lösbares Verbindungselement verbunden ist.

4. Bolzenschweißvorrichtung nach einem der vorhergehenden Ansprüche, wobei der Bolzengreifer (22) zumindest zwei Klauen (25) umfasst, die relativ zueinander bewegbar sind, wobei die Klauen (25) vorzugsweise pneumatisch oder hydraulisch bewegbar sind.

5. Bolzenschweißvorrichtung nach einem der Ansprüche 1-4, wobei das Schweißwerkzeug (2) einen Körper (14) aufweist und das Bolzengreiferstellglied (18) zum Bewegen des Bolzengreifers (22) relativ zu dem Körper (14) und/oder einer Arbeitsfläche (36) ausgebildet ist.

6. Bolzenschweißvorrichtung nach einem der Ansprüche 1-5, wobei das Schweißwerkzeug (2) einen Körper (14) aufweist und das Schildgreiferstellglied (20) zum Bewegen des Schildgreifers (24) relativ zu dem Körper (14) und/oder einer Arbeitsfläche (36) ausgebildet ist.

7. Bolzenschweißvorrichtung nach einem der vorhergehenden Ansprüche, wobei der Schildgreifer (24) zumindest zwei Klauen (30) umfasst, die relativ zueinander bewegbar sind.

8. Bolzenschweißwerkzeug, umfassend:
einen Bolzengreifer (22);
ein Bolzengreiferstellglied (18);
zumindest ein elektrisches Verbindungselement, und
zumindest ein Verbindungselement für einen Roboter (3);
wobei das Bolzengreiferstellglied (18) ein elektrisch angetriebenes Stellglied ist,
**gekennzeichnet durch**
einen Schildgreifer (24), wobei ein Schildgreiferstellglied (20) vorgesehen ist und/oder wobei der Schildgreifer (24) relativ zu dem Bolzengreifer (22) bewegbar ist.

9. Bolzenschweißwerkzeug nach Anspruch 8, wobei der Bolzengreifer (22) ein Solenoid umfasst.

10. Bolzenschweißwerkzeug nach Anspruch 8 oder 9, wobei der Bolzengreifer (22) zumindest zwei Klauen (25) umfasst, die relativ zueinander bewegbar sind.

11. Bolzenschweißvorrichtung nach einem der Ansprüche 8-10, wobei das Schweißwerkzeug (2) einen Körper (14) aufweist und das Bolzengreiferstellglied (18) zum Bewegen des Bolzengreifers (22) relativ zu dem Körper (14) und/oder einer Arbeitsfläche (36) ausgebildet ist.

12. Bolzenschweißvorrichtung nach einem der Ansprüche 8-11, wobei das Schweißwerkzeug (2) einen Körper (14) aufweist und das Schildgreiferstellglied (20) zum Bewegen des Schildgreifers (24) relativ zu dem Körper (14) und/oder einer Arbeitsfläche (36) ausgebildet ist.

13. Verfahren zum Bolzenschweißen, umfassend:
Greifen eines Bolzens (29) mit einem Bolzengreifer (22);
Positionieren des Bolzens (29) neben einer Arbeitsfläche (36) mit einem Roboter (3);
Senden eines elektrischen Stromes durch den Bolzen (29) und die Arbeitsfläche (36);
Zurückziehen des Bolzens (29) von der Arbeitsfläche (36) in einer ersten Richtung, dabei Bilden eines Lichtbogens zwischen dem Bolzen (29) und der Arbeitsfläche (36);
Erwärmen von zumindest einem von der Arbeitsfläche (36) und einem Bereich des Bolzens (29), der zu der Arbeitsfläche (36) hin gerichtet ist, durch den Bogen; und
Zwingen den Bolzen (29) zurück gegen die Arbeitsfläche (36) in einer zweiten Richtung, die im Wesentlichen der ersten Richtung entgegengesetzt ist;
**dadurch gekennzeichnet**, das
zumindest eine der Bewegungen in der ersten Richtung und in der zweiten Richtung erhalten wird durch zumindest elektrisches betätigen eines Bolzengreiferstellglieds (18), und
Positionieren eines Schildes (34) gegenüber der Arbeitsfläche (36), um den Bolzen (29) herum.

14. Verfahren nach Anspruch 13, weiterhin umfassend Positionieren des Bolzens (29) mit dem Ende gegenüber der Arbeitsfläche (36) mittels dem Bolzengreiferstellglied (18).

15. Verfahren nach Anspruch 13 oder 14, wobei das Schild (34) gegenüber der Arbeitsfläche (36) positioniert wird, durch Bewegen eines Schildgreifers (24) relativ zu dem Bolzen (15).

## Revendications

1. Appareil de soudure pour clou, comprenant :
un robot (3) ; et
un outil de soudure (2) ;
dans lequel l'outil de soudure (2) est connecté au robot (3) et déplaçable par celui-ci ;
l'outil de soudure (2) ayant :
un préhenseur de clou (22) ; et
un actionneur de préhenseur de clou (18) pour déplacer le préhenseur (22) ;
dans lequel l'actionneur de préhenseur de clou (18) est un actionneur électrique,
**caractérisé par**
un préhenseur de bouclier (24), dans lequel un actionneur de préhenseur de bouclier (20) est fourni et/ou dans lequel le préhenseur de bouclier (24) est déplaçable par rapport au préhenseur de clou (22).

2. Appareil de soudure pour clou selon la revendication 1, dans lequel l'actionneur de préhenseur de clou (18) comprend un solénoïde et/ou dans lequel l'actionneur de préhenseur de bouclier (20) comprend un solénoïde.

3. Appareil de soudure pour clou selon la revendication 1 ou 2, dans lequel l'outil de soudure (2) est connecté au robot (3) par au moins un connecteur libérable.

4. Appareil de soudure pour clou selon l'une quelconque des revendications précédentes, dans lequel le préhenseur de clou (22) comprend au moins deux griffes (25), déplaçables l'une par rapport à l'autre, dans lequel les griffes (25) sont déplaçables de préférence de manière pneumatique ou hydraulique.

5. Appareil de soudure pour clou selon l'une quelconque des revendications 1 - 4, dans lequel l'outil de soudure (2) a un corps (14) et l'actionneur de préhenseur de clou (18) est conçu pour déplacer le préhenseur de clou (22) par rapport au corps (14) et/ou à une surface de travail (36).

6. Appareil de soudure pour clou selon l'une quelconque des revendications 1 - 5, dans lequel l'outil de soudure (2) a un corps (14) et l'actionneur de préhenseur de bouclier (20) est conçu pour déplacer le préhenseur de bouclier (24) par rapport au corps (14) et/ou à une surface de travail (36).

7. Appareil de soudure pour clou selon l'une quelconque des revendications précédentes, dans lequel le préhenseur de bouclier (24) comprend au moins deux griffes (30), déplaçables l'une par rapport à l'autre.

8. Outil de soudure pour clou, comprenant :
un porte-clou (22) ;
un actionneur de porte-clou (18) ;
au moins un connecteur électrique, et
au moins un connecteur pour un robot (3) ;
dans lequel l'actionneur de porte-clou (18) est un actionneur électrique,
**caractérisé par**
un préhenseur de bouclier (24), dans lequel un actionneur de préhenseur de bouclier (20) est fourni et/ou dans lequel le préhenseur de bouclier (24) est déplaçable par rapport au porte-clou (22).

9. Outil de soudure pour clou selon la revendication 8, dans lequel le porte-clou (22) comprend un solénoïde.

10. Outil de soudure pour clou selon la revendication 8 ou 9, dans lequel le porte-clou (22) comprend au moins deux griffes (25), déplaçables l'une par rapport à l'autre.

11. Appareil de soudure pour clou selon l'une quelconque des revendications 8 - 10, dans lequel l'outil de soudure (2) a un corps (14) et l'actionneur de préhenseur de clou (18) est conçu pour déplacer le préhenseur de clou (22) par rapport au corps (14) et/ou à une surface de travail (36).

12. Appareil de soudure pour clou selon l'une quelconque des revendications 8 - 11, dans lequel l'outil de soudure (2) a un corps (14) et l'actionneur de préhenseur de bouclier (20) est conçu pour déplacer le préhenseur de bouclier (24) par rapport au corps (14) et/ou à une surface de travail (36).

13. Procédé de soudure pour clou, comprenant :
la préhension d'un clou (29) avec un préhenseur de clou (22) ;
le positionnement du clou (29) de manière adjacente à une surface de travail (36) avec un robot (3) ;
l'envoi d'un courant électrique à travers le clou (29) et la surface de travail (36) ;
le retrait du clou (29) de la surface de travail (36) dans une première direction, en formant ainsi un arc électrique entre le clou (29) et la surface de travail (36) ;
le chauffage d'au moins une de la surface de travail (36) et d'une zone du clou (29) faisant face à la surface de travail (36) par l'arc ; et
le forçage du clou (29) contre la surface de travail (36) dans une deuxième direction, sensiblement opposée à la première direction ;
**caractérisé en ce que**
au moins un du mouvement dans la première direction et dans la deuxième direction est obtenu par actionnement au moins électrique d'un actionneur de préhenseur de clou (18),
et
le positionnement d'un bouclier (34) contre la surface de travail (36) autour du clou (29).

14. Procédé selon la revendication 13, comprenant en outre le positionnement du clou (29) contre la surface de travail (36) avec ladite extrémité par l'actionneur de préhenseur (18).

15. Procédé selon la revendication 13 ou 14, dans lequel le bouclier (34) est positionné contre la surface de travail (36) par déplacement d'un préhenseur de bouclier (24) par rapport au clou (15).
